# EUROPÄISCHE PATENTANMELDUNG

(11) **EP 1 168 773 A2**
(43) Veröffentlichungstag der Anmeldung: **02.01.2002**
(21) Anmeldenummer: 01115359.0
(22) Anmeldetag: 26.06.2001
(51) Int. Cl.: H04L 29/12, H04L 29/06

(54) **Verfahren zur Erzeugung einer zweiten Adresse**

(30) Priorität: 28.06.2000 DE 10030522
(71) Anmelder: BECKER GmbH, D-76307 Karlsbad (DE)
(72) Erfinder: Bähren, Frank, 76137 Karlsruhe (DE); Wietzke, Joachim, 76228 Karlsruhe (DE); Schöpp, Harald, 76275 Ettlingen (DE); Bischoff, Joachim, 75210 Keltern (DE); Lappe, Dirk, 76228 Karlsruhe (DE); Wolf, Stefan, 64367 Mühltal (DE)
(74) Vertreter: Patentanwälte Westphal, Mussgnug & Partner

(57) **Zusammenfassung**

Um bei der Kommunikation von Geräten (1 bis 9), die in einem ersten Netzwerk (M) miteinander vernetzt sind, mit in einem zweiten Netzwerk (I) untereinander vernetzten Geräten Fehlverbindungen zu vermeiden und den Datenschutz zu erhöhen, wird jedem Gerät (1 bis 9) zusätzlich zu einer ersten das Gerät im ersten Netzwerk (M) identifizierenden Adresse eine zweite Adresse zugeordnet. Diese zweite Adresse wird durch Verküpfung der ersten Adresse mit einer mathematischen Bildungsvorschrift, z. B. einer Prefix, gebildet und ermöglicht eine Identifizierung der im ersten Netzwerk (M) miteinander vernetzten Geräte als dem zweiten Netzwerk zugehörende Geräte. Besonders vorteilhaft ist es, die Prefix so zu wählen, dass die zweiten Adressen gemäß der Definition rfe 1918 als private Adressen interpretiert werden. Das erfindungsgemäße Verfahren ist besonders für die Kommunikation zwischen einem privaten Netzwerk, z. B. ein in ein Fahrzeug eingebautes MOST-Netzwerk (M), und einem öffentlichen Netzwerk, z. B. dem Internet (I), geeignet.

## Beschreibung

Die Erfindung betrifft ein Verfahren zur Erzeugung einer zweiten Adresse zur Identifikation von Geräten in einem mit einem ersten Netzwerk verbindbaren zweiten Netzwerk, wobei die Geräte im ersten Netzwerk untereinander vernetzt sind und jedem Gerät eine erste Adresse zur Identifikation im ersten Netzwerk zugeordnet ist.

Damit in einem ersten Netzwerk miteinander vernetzte Geräte mit in einem zweiten Netzwerk miteinander vernetzten Geräten kommunizieren können, ist eine eindeutige Adressierung der Geräte erforderlich.

Das erste Netzwerk kann z. B. ein MOST-Netzwerk sein, eine Multimediaanlage, mit der nach dem neuesten Stand der Technik ausgestattete Kraftfahrzeuge, z. B. Pkw, Lkw und Omnibusse ausgerüstet sind. MOST steht als Abkürzung für Media Oriented Systems Transport oder Media Oriented Synchronous Transfer. Ein MOST-Netzwerk ist z. B. ringförmig aufgebaut und vernetzt mehrere Einheiten untereinander, die je nach Bedarf als Datenquelle, Datensenke oder als Transceiver dienen.

So kann ein MOST-Netzwerk in einem Kraftfahrzeug beispielsweise einen Rundfunkempfänger, einen Fernsehempfänger, einen Bildschirm, einen CD-Spieler, einen CD-Wechsler, einen DVD-Spieler, einen DVD-Wechsler, einen Cassettenrecorder, aktive Lautsprecher, eine Navigationsanlage, ein Autotelefon, ein schnurloses Telefon sowie Bedien- und Steuereinheiten miteinander vernetzen, um nur einige Beispiele für die Geräte anzuführen.

Das zweite Netzwerk kann z. B. das Internet sein.

Es ist nun Aufgabe der Erfindung, ein Verfahren zur Adressierung von in einem ersten Netzwerk miteinander vernetzten Geräten anzugeben, das die Kommunikation mit in einem zweiten Netzwerk vernetzten Geräten vereinfacht und dennoch im Sinne des Datenschutzes eine hohe Sicherheit gegen Fehlverbindungen bietet.

Die Erfindung löst diese Aufgabe mit den im Anspruch 1 angegebenen Merkmalen dadurch, dass die zweite Adresse eines Gerätes durch Verknüpfung seiner ersten Adresse mit einer mathematischen Bildungsvorschrift erzeugt wird.

Jedem der im ersten Netzwerk untereinander vernetzten Geräte ist eine Adresse zugeordnet, anhand der das Gerät im ersten Netzwerk identifizierbar ist. Wenn das erste Netzwerk mit einem zweiten Netzwerk kommuniziert, in welchem ebenfalls Geräte untereinander vernetzt sind, sieht das erfindungsgemäße Verfahren vor, dass jedem Gerät des ersten Netzwerkes eine zweite Adresse zugeordnet wird, anhand der die Geräte des ersten Netzwerkes als dem zweiten Netzwerk zugehörend identifizierbar sind. Diese zweite Adresse wird durch Verknüpfung der ersten Adresse mit einer mathematischen Bildungsvorschrift gebildet, um eine eindeutige Zuordnung zwischen den Adressen und den Geräten zu erzielen.

Besonders vorteilhaft ist es, hierfür eine feste Prefix zu wählen.

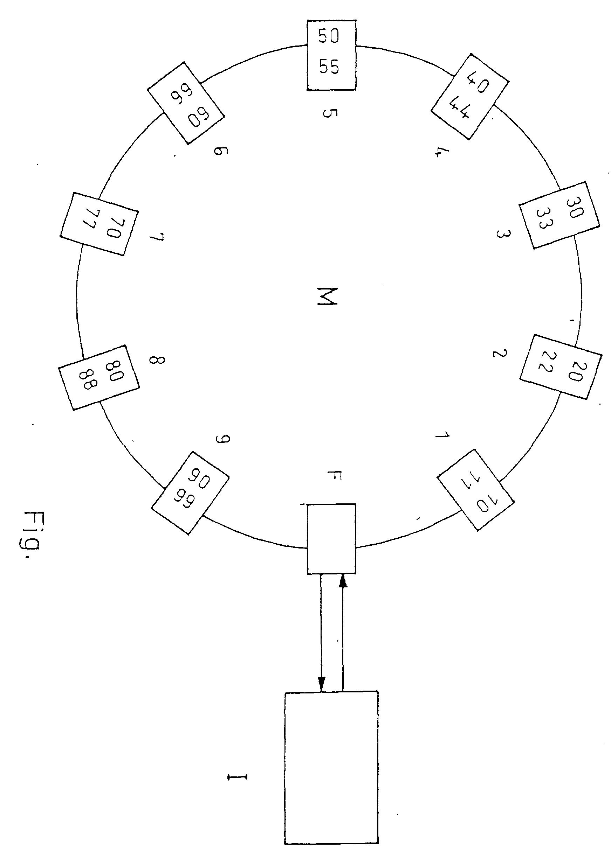

Die Erfindung wird nun beispielhaft anhand eines in der Figur gezeigten Ausführungsbeispieles beschrieben und erläutert.

In der Figur ist ein MOST-Netzwerk mit neun Geräten 1 bis 9 gezeigt. Zusätzlich zu diesen neun Geräten 1 bis 9 ist in dem MOST-Netzwerk M ein sogenannter Firewall F vorgesehen.

Ein Firewall ist ein Rechner, der als Schnittstelle ein privates Netz - in diesem Fall das MOST-Netzwerk M - und ein öffentliches Netzwerk miteinander verbindet. In der Figur ist als öffentliches Netzwerk das Internet I vorgesehen. Auf den Firewall F haben daher sowohl das MOST-Netzwerk M als auch das Internet I Zugriff. Diese beiden Netzwerke teilen sich gewissermaßen den Firewall.

Jedem der Geräte 1 bis 9 ist nun eine erste Adresse 10 bis 90 zugeordnet, anhand derer es im MOST-Netzwerk identifizierbar ist. Durch Verknüpfung dieser ersten Adresse mit einer Prefix wird eine zweite Adresse für jedes der Geräte 1 bis 9 generiert. Die zweiten Adressen sind in der Figur mit 11, 22, 33, 44, 55, 66, 77, 88 und 99 bezeichnet. Mittels dieser zweiten Adressen werden die im ersten Netzwerk - dem MOST-Netzwerk - miteinander vernetzten Geräte 1 bis 9 dem zweiten Netzwerk - dem Internet I - zugeordnet. Mittels dieser zweiten Adressen ist eine eindeutige Identifizierung der im ersten Netzwerk miteinander vernetzten Geräte vom zweiten Netzwerk aus möglich.

Es ist besonders vorteilhaft, die Prefix zur Erzeugung der zweiten Adressen so zu wählen, dass die zweiten Adressen gemäß der Definition rfe 1918 als private Adressen interpretiert werden. Durch diese Maßnahme wird der Datenschutz und der Schutz vor Fehlverbindungen beträchtlich erhöht.

Das erfindungsgemäße Verfahren ist zwar besonders gut für die Kommunikation zwischen einem MOST-Netzwerk und dem Internet geeignet, jedoch keineswegs auf diesen einen Anwendungsfall bechränkt. Das erfindungsgemäße Verfahren ist für Netzwerke jeglicher Art geeignet. Weil mit nur geringem Aufwand eine hohe Sicherheit gegen Fehlverbindungen und ein ausgezeichneter Datenschutz erzielt werden, ist das erfindungsgemäße Verfahren besonders für die Kommunikation zwischen einem privaten und einem öffentlichen Netzwerk geeignet.

Bezugszeichenliste
- I: Internet
- M: MOST-Netzwerk
- F: Firewall
- 10 bis 90: erste Adresse
- 11 bis 99: zweite Adresse

## Patentansprüche

1. Verfahren zur Erzeugung einer zweiten Adresse zur Identifikation von Geräten (1 bis 9) in einem mit einem ersten Netzwerk (M) verbindbaren zweiten Netzwerk (I), wobei die Geräte (1 bis 9) im ersten Netzwerk (1 bis 9) miteinander vernetzt sind und jedem Gerät (1 bis 9) eine erste Adresse (10 bis 90) zur Identifikation im ersten Netzwerk (M) zugeordnet ist,
**dadurch gekennzeichnet, dass** die zweite Adresse (11 bis 99) eines Gerätes (1 bis 9) durch Verknüpfung seiner ersten Adresse (10 bis 90) mit einer mathematischen Bildungsvorschrift erzeugt wird.

2. Verfahren nach Anspruch 1,
**dadurch gekennzeichnet, dass** für die mathematische Bildungsvorschrift eine feste Prefix gewählt wird.

3. Verfahren nach Anspruch 2,
**dadurch gekennzeichnet, dass** die Prefix so gewählt wird, dass die zweite Adresse gemäß der Definition rfe 1918 als private Adresse interpretiert wird.

4. Verfahren nach Anspruch 1, 2 oder 3,
**dadurch gekennzeichnet, dass** das erste Netzwerk ein MOST-Netzwerk (M) darstellt.

5. Verfahren nach Anspruch 1, 2, 3 oder 4,
**dadurch gekennzeichnet, dass** es sich bei dem zweiten Netzwerk um das Internet (I) handelt.

6. Verfahren nach Anspruch 5,
**dadurch gekennzeichnet, dass** im MOST-Netzwerk (M) ein Firewall (F) als Schnittstelle zwischen dem MOST-Netzwerk (M) und dem Internet (I) vorgesehen ist.
